# DEMANDE DE BREVET EUROPEEN

(11) **EP 0 888 870 A1**
(43) Date de publication de la demande: **07.01.1999**
(21) Numéro de dépôt: 98401679.0
(22) Date de dépôt: 03.07.1998
(51) Int. Cl.: B29C 70/58

(54) **Article en matiere plastique, procédé de fabrication et composition de moulage**

(30) Priorité: 04.07.1997 FR 9708503
(71) Demandeur: L'OREAL, 75008 Paris (FR)
(72) Inventeur: Gueret, Jean-Louis, 75018 Paris (FR)
(74) Mandataire: Leszczynski, André

(57) **Abrégé**

Article moulé comprenant une matrice en matière plastique transparente incorporant une charge constituée essentiellement de fibres, ladite charge étant dans une proportion comprise entre 1 et 25 % en masse, la longueur moyenne des fibres constituant ladite charge étant comprise entre 100 et 700 µm.

## Description

La présente invention concerne la fabrication d'articles moulés en matière plastique et plus particulièrement, mais non exclusivement, les dispositifs de conditionnement de produits cosmétiques.

On connaît par les brevets français 2 413 205 et européen 0 438 339 de la société déposante des procédés de fabrication d'articles en matière plastique moulée permettant d'imiter l'aspect de la pierre, du marbre ou de la nacre.

Ces procédés ont permis d'améliorer notablement l'esthétique des dispositifs de conditionnement de produits cosmétiques.

Il existe toutefois un besoin pour créer de nouveaux effets optiques afin de rendre de tels dispositifs toujours plus attrayants pour le consommateur.

En outre, les procédés connus n'offrent pas entière satisfaction, car l'on peut observer à la surface de certains articles des traces liées aux flux de matière pendant le moulage, ce qui nuit à l'esthétique.

La présente invention a pour but de remédier à cet inconvénient et de rendre plus attrayants encore pour le consommateur les dispositifs de conditionnement de produits cosmétiques notamment.

Elle y parvient grâce à un article en matière plastique moulée, caractérisé par le fait qu'il comprend une matrice en matière plastique transparente incorporant une charge constituée essentiellement de fibres, ladite charge étant dans une proportion comprise entre 1 et 25 % en masse, la longueur moyenne desdites fibres étant comprise entre 100 et 700 µm.

De préférence, la charge est dans une proportion comprise entre 1 et 15 % en masse, avantageusement entre 2 et 10 % et la longueur moyenne des fibres est comprise entre 150 et 550 µm.

Les proportions données ci-dessus correspondent à la masse de la charge par rapport à la masse totale charge plus matière plastique transparente.

De préférence également, la charge est constituée de fibres végétales, avantageusement des fibres de bois, ces fibres pouvant être colorées ou rendues réfléchissantes par encapsulage dans un matériau coloré ou réfléchissant.

Il faut comprendre par "fibre" au sens de l'invention tout corps généralement oblong, dont le contour est de préférence irrégulier.

La matière plastique utilisée peut être colorée tout en restant transparente.

On peut créer des effets d'opalescence en jouant sur l'état de surface de l'article, c'est-à-dire en rendant sa surface dépolie par endroits.

On peut également créer un effet de loupe lorsque la surface de l'article est polie.

L'article peut être mis en forme par tout procédé de moulage de matière thermoplastique connu, tel que le moulage par injection par exemple.

D'une façon générale, l'épaisseur de paroi d'un article moulé conforme à l'invention est d'au moins 0,2 mm et de préférence supérieure ou égale à 1 mm.

L'invention a encore pour objet un procédé de fabrication d'un article en matière plastique moulée tel que précité, caractérisé par le fait qu'il comporte les étapes consistant à :
- mélanger une matière plastique transparente à une charge constituée essentiellement de fibres, la proportion de ladite charge dans le mélange étant comprise entre 1 et 25 % en masse, la longueur desdites fibres étant comprise en moyenne entre 100 et 700 µm,
- mouler l'article.

L'invention a encore pour objet une composition destinée à être moulée, caractérisée par le fait qu'elle est constituée essentiellement, voire exclusivement, d'un mélange d'une matière plastique transparente et d'une charge de fibres, la proportion de la charge dans le mélange étant comprise entre 1 et 25 % en masse, les fibres constituant cette charge ayant en moyenne une longueur comprise entre 100 et 700 µm.

En tant que matière plastique transparente, on peut utiliser une matière thermoplastique telle qu'un styrénique, par exemple du polystyrène (PS), une polyoléphine telle que par exemple du polypropylène transparent (PP), du polychlorure de vinyle (PVC), du polyéthylène téréphtalate (PET), un polyacrylique (PMMA) ou un copolymère tel que par exemple le styrène/acrylonitrile (SAN), cette liste n'étant bien sûr nullement limitative.

On peut ainsi utiliser encore un mélange de matières thermoplastiques transparentes ayant différentes natures chimiques.

Pour mieux faire comprendre l'invention, on va en décrire trois exemples non limitatifs de mise en oeuvre, portant sur la réalisation de capuchons de fermeture de flacons à partir des compositions suivantes :

### Exemple 1

Mélange composé de :
- 10 % en masse de fibres de bois, la longueur moyenne des fibres étant 250 µm et la densité des fibres étant comprise entre 0,11 et 0,14 g par cm³.
- 90 % en masse de PP transparent, sous forme de granulés.

### Exemple 2

Mélange composé de :
- 15 % en masse de fibres de bois, la longueur moyenne des fibres étant 160 µm et la densité des fibres comprise entre 0,1 et 0,135 g par cm³.
- 85 % en masse de SAN transparent, sous forme de granulés.

### Exemple 3

Mélange composé de :
- 90 % en masse de PP transparent, sous forme de granulés,
- 10 % en masse de fibres de bois, la longueur moyenne des fibres étant égale à 530 µm, la densité des fibres étant comprise entre 0,15 et 0,17 g par cm³.

Chacun des trois mélanges ci-dessus est chauffé et extrudé, puis moulé au moyen d'un dispositif de moulage par injection connu en lui-même.

La température de la matière plastique est de l'ordre de 170°C ± 25°C.

On remarquera que la densité des fibres utilisées est comprise d'une façon générale entre 0,1 et 0,2 g/cm³.

Dans le troisième exemple, la surface du moule est dépolie par endroits pour obtenir un effet d'opalescence.

L'examen à l'oeil nu des trois capuchons révèle l'absence de trace de flux de matière.

On remarque également à l'examen des capuchons que, malgré l'emploi d'une matière plastique transparente, les fibres dispersées forment un écran empêchant de voir clairement au travers de leurs parois.

Lorsque la matière plastique transparente est incolore, la couleur de l'article est donnée par la couleur des fibres.

Par ailleurs, selon la quantité de fibres qui a été introduite dans la matrice en matière plastique transparente, l'effet optique obtenu est différent.

Ainsi, pour donner l'impression d'une part que l'article est recouvert sur sa surface extérieure, visible par l'observateur, d'un vernis brillant et d'autre part que les fibres sont confinées au voisinage de la surface intérieure de l'article, on utilise une quantité relativement faible de fibres et un moule dont la surface est polie.

Il convient de noter que cet effet optique est obtenu seulement lorsque l'on utilise une charge constituée de fibres et que leur taille se situe dans la gamme qui caractérise l'invention.

Ainsi, des essais réalisés en adjoignant à la matière plastique transparente un pigment dans une proportion suffisante pour lui faire perdre sa transparence ont montré que l'on cessait de bénéficier dans ce cas des avantages de l'invention.

Par contre, on peut utiliser sans sortir du cadre de l'invention une matière plastique transparente colorée dans sa masse au moyen d'un colorant liquide soluble ou autre, d'un azurant optique ou d'un anti-UV, et qui reste transparente.

En jouant sur la couleur et/ou la proportion des fibres, on peut modifier la couleur de l'article et donner en outre l'illusion à l'observateur que le changement de la couleur de l'article provient d'une modification de la couleur de la matière plastique transparente utilisée.

On dispose ainsi d'un moyen pratique pour compenser d'éventuelles différences de teinte des lots de matière plastique colorée transparente utilisés successivement pour la fabrication d'une série d'articles.

Pour colorer les fibres, on utilise de préférence un procédé d'encapsulation connu en lui-même, consistant à enrober les fibres d'un matériau coloré qui ne déteint pas au contact de la matière plastique transparente.

On obtient aussi des effets optiques particulièrement intéressants et originaux en utilisant des fibres rendues réfléchissantes.

Enfin, comme expliqué plus haut, l'invention permet de supprimer, de façon surprenante, les traces liées aux flux de matière pendant le moulage.

Bien entendu, on ne sort pas du cadre de l'invention en utilisant une charge fibreuse constituée par un mélange de fibres végétales de différentes longueurs, un mélange de fibres végétales encapsulées et de fibres végétales non encapsulées, ni en remplaçant les fibres végétales par des fibres synthétiques ou minérales procurant un résultat analogue.

## Revendications

1. Article moulé, caractérisé par le fait qu'il comprend une matrice en matière plastique transparente incorporant une charge constituée essentiellement de fibres, ladite charge étant dans une proportion comprise entre 1 et 25 % en masse, la longueur moyenne des fibres constituant ladite charge étant comprise entre 100 et 700 µm.

2. Article selon la revendication 1, caractérisé par le fait que ladite charge est dans une proportion comprise entre 1 et 15 % en masse, de préférence entre 2 et 10 %.

3. Article moulé selon la revendication 1 ou 2, caractérisé par le fait que la longueur moyenne des fibres constituant ladite charge est comprise entre 150 et 550 µm.

4. Article selon l'une quelconque des revendications 1 à 3, caractérisé par le fait que ladite charge est constituée par des fibres végétales.

5. Article selon la revendication 4, caractérisé par le fait que ladite charge est constituée par des fibres de bois.

6. Article selon l'une quelconque des revendications 1 à 5, caractérisé par le fait que la densité de ladite charge est comprise entre 0,1 et 0,2 g/cm³.

7. Article selon l'une quelconque des revendications 1 à 6, caractérisé par le fait que sa surface est dépolie par endroits.

8. Article selon l'une quelconque des revendications 1 à 7, caractérisé par le fait que sa surface est polie par endroits et crée un effet de loupe.

9. Article selon l'une quelconque des revendications 1 à 8, caractérisé par le fait que lesdites fibres sont colorées ou rendues réfléchissantes par encapsulation dans un matériau coloré ou réfléchissant.

10. Article selon l'une quelconque des revendications précédentes, caractérisé par le fait que ladite matière plastique transparente est colorée.

11. Article selon l'une quelconque des revendications précédentes, caractérisé par le fait qu'il constitue tout ou partie d'un dispositif de conditionnement de produit cosmétique.

12. Procédé de fabrication d'un article en matière plastique moulée, caractérisé par le fait qu'il comporte les étapes consistant à
- mélanger une matière plastique transparente à une charge constituée essentiellement de fibres, la proportion de ladite charge dans le mélange étant comprise entre 1 et 25 % en masse et la longueur moyenne des fibres étant comprise entre 100 et 700 µm,
- mouler l'article.

13. Composition destinée au moulage d'un article, caractérisée par le fait qu'elle est constituée essentiellement d'un mélange d'une matière plastique transparente et d'une charge de fibres, la proportion de la charge dans le mélange étant comprise entre 1 et 25 % en masse, lesdites fibres ayant une longueur moyenne comprise entre 100 et 700 µm.
